# EUROPÄISCHE PATENTSCHRIFT

(11) **EP 1 977 164 B1**
(45) Veröffentlichungstag und Bekanntmachung des Hinweises auf die Patenterteilung: **17.10.2018**
(21) Anmeldenummer: 06819688.0
(22) Anmeldetag: 23.11.2006
(51) Int. Cl.: F23Q 7/00, G01L 23/10, G01L 23/22

(54) **GLÜHSTIFTKERZE**
PENCIL-TYPE GLOW PLUG
BOUGIE CRAYON DE PRÉCHAUFFAGE

(30) Priorität: 23.12.2005 DE 102005061877; 24.02.2006 DE 102006008639
(43) Veröffentlichungstag der Anmeldung: 08.10.2008
(73) Patentinhaber: ROBERT BOSCH GMBH, 70442 Stuttgart (DE); Kistler Holding AG, 8408 Winterthur (CH)
(72) Erfinder: KERN, Christoph, 71546 Aspach (DE); SCHOTT, Steffen, 71701 Schwieberdingen (DE); SALTIKOV, Pavlo, 71334 Waiblingen (DE); KLEINDL, Michael, 70435 Stuttgart (DE); ZACH, Reiko, 71686 Remseck (DE); WOLFER, Peter, CH-8451 Kleinandelfingen (CH); CAVALLONI, Claudio, 8105 Regensdorf (CH); HESS, Reinhold, 8405 Winterthur (CH); MÜLLER, Michael, 8544 Rickenbach-Attikon (CH); BERTOLA, Andrea, 8047 Zürich (CH)
(86) Internationale Anmeldenummer: PCT/EP2006/068787
(87) Internationale Veröffentlichungsnummer: WO 2007/073998

(56) Entgegenhaltungen:
- EP-A- 1 598 651
- DE-A1- 10 343 521
- DE-A1- 10 346 330

## Beschreibung

### Stand der Technik

Die Erfindung betrifft eine Glühstiftkerze zur Anordnung in einer Kammer einer Brennkraftmaschine. Speziell betrifft die Erfindung eine Glühstiftkerze zur Anordnung in einer Vor-, Wirbel- oder Brennkammer einer luftverdichtenden, selbstzündenden Brennkraftmaschine.

Aus der DE 103 43 521 A1 ist eine Druckmessglühkerze für einen Dieselmotor bekannt. Die bekannte Druckmessglühkerze weist einen Kerzenkörper und einen im Kerzenkörper angeordneten Heizstab auf. Ferner ist zwischen dem Heizstab und dem Kerzenkörper ein Drucksensor angeordnet, wobei der Drucksensor durch den Druck im Brennraum des Zylinders beeinflusst wird, der vom Heizstab übertragen wird. Ferner ist eine Membran vorgesehen, die den Drucksensor gegenüber dem Brennraum abdichtet.

Die aus der DE 103 43 521 A1 bekannte Druckmessglühkerze hat den Nachteil, dass die Membran beim Einbau der Druckmessglühkerze in den Zylinder auf Grund der benötigten Einbaukraft erheblichen Belastungen ausgesetzt ist, wodurch es zu einer Beschädigung der Membran kommen kann. Außerdem liegt die Membran im Kraftpfad zwischen dem Heizstab und dem Drucksensor, so dass die Druckmessung beeinträchtigt wird. Ein weiterer Nachteil der bekannten Druckmessglühkerze ist die große Beabstandung des Druckmesssensors vom Dichtkonus des Kerzenkörpers, da dadurch Eigenschwingungen der Druckmessglühkerze bei niedrigen Frequenzen begünstigt werden. Diese Eigenschwingungen können eine Messung des Druckes verschlechtern oder unmöglich machen und im Extremfall auch eine Zerstörung der Druckmessglühkerze zur Folge haben.

Aus DE 103 46 330 A1 ist eine Glühstiftkerze mit einem Heizelement und einem Drucksensor bekannt. Der Drucksensor ist zwischen einem mit dem Gehäuse verbundenen Rand und einem mit dem Heizelement verbundenen Auflagering angeordnet. Der Rand des Gehäuses bildet ein Fixierelement für den Drucksensor, welches den Drucksensor mit einer Vorspannung beaufschlagt.

Eine weitere Glühstiftkerze mit einem Heizelement und einem Drucksensor ist aus EP 1 598 651 A2 bekannt. Das Heizelement ist dabei mechanisch in Richtung auf den Drucksensor vorgespannt. Die Vorspannung wird durch ein Federelemente erzeugt, das sich am Heizelement abstützt.

### Offenbarung der Erfindung

Die erfindungsgemäße Glühstiftkerze mit den Merkmalen des Anspruchs 1 hat den Vorteil, dass durch das hülsenförmige Vorspannelement eine von dem Heizelement und durch die Verbrennungsgase in das Gehäuse gelangende Wärme über das hülsenförmige Vorspannelement auf ein Fixierelement und von diesem auf das Gehäuse abgeleitet werden kann, wodurch eine Temperatur des Drucksensors im Betrieb im wesentlichen konstant ist, so dass temperaturbedingte Verfälschungen des Messergebnisses verringert sind. Ferner wird durch die Anordnung des Drucksensors im Inneren des hülsenförmigen Vorspannelementes ein kompakter Aufbau der Glühstiftkerze ermöglicht, bei dem der Drucksensor näher am Heizelement angeordnet werden kann.

Durch die in den Unteransprüchen aufgeführten Maßnahmen sind vorteilhafte Weiterbildungen der im Anspruch 1 angegebenen Glühstiftkerze möglich.

Vorteilhaft ist es, dass das Vorspannelement beabstandet zu einer Gehäuseinnenwand des Gehäuses angeordnet ist. Dadurch wird ein Kontakt zwischen dem Vorspannelement und dem Gehäuse vermieden, so dass Reibungsverluste verhindert sind. Außerdem ist eine Beeinflussung der durch das Vorspannelement vorgegebenen Vorspannung auf diese Weise verhindert.

In vorteilhafter Weise sind ein oder mehrere Kompensationselemente vorgesehen, die zusammen mit dem Drucksensor von dem Vorspannelement über das Heizelement und das Fixierelement mit der Vorspannung beaufschlagt sind, wobei die Kompensationselemente zum Kompensieren einer durch thermische Längenänderungen von Bauteilen des Kraftpfads der Glühstiftkerze bedingten Beaufschlagung des Drucksensors dienen. Die Bauteile des Kraftpfads der Glühstiftkerze können stark unterschiedliche Wärmeausdehnungskoeffizienten aufweisen, so dass Temperaturänderungen zu wesentlichen Dehnungsunterschieden der Bauteile führen. Die Kompensationselemente dienen zur Kompensation dieser Dehnungsunterschiede in einer axialen Richtung, um eine thermische Beeinflussung der Druckmessung zu reduzieren oder vollständig aufzuheben. Die Kompensation betrifft dabei hauptsächlich die im Kraftpfad angeordneten Bauteile, das heißt das Vorspannelement und die zusammen mit dem Drucksensor von dem Vorspannelement mit der Vorspannung beaufschlagten Bauteile. Die Kompensationselemente sind dabei vorzugsweise zwischen dem Drucksensor und dem Heizelement und/oder dem Drucksensor und dem Fixierelement angeordnet.

Vorteilhaft ist es, dass eine metallische Kraftübertragungshülse vorgesehen ist, dass die Kraftübertragungshülse mit dem Drucksensor in Wirkverbindung steht, dass innerhalb der Kraftübertragungshülse ein mit der Kraftübertragungshülse verbundener Metallanschlussbolzen angeordnet ist, der mit einer Glühstromleitung verbunden ist und zur Zuführung von elektrischer Energie an das Heizelement dient, und dass die Kraftübertragungshülse gegenüber dem Metallanschlußbolzen elektrisch isoliert ist. Dadurch wird ein kompakter Aufbau der Glühstiftkerze ermöglicht, bei dem der Drucksensor nahe an dem Heizelement angeordnet werden kann, so dass die Frequenz von Eigenschwingungen zu höheren Frequenzbereichen hin verschoben ist. Außerdem wird der Einsatz von leicht zu bearbeitenden und somit kostengünstigen Elementen ermöglicht. Speziell kann an Stelle einer keramischen Kraftübertragungshülse, deren Bearbeitung aufwändig ist, eine aus einem Metall bestehende Kraftübertragungshülse eingesetzt werden. Dadurch können die Stückkosten der Glühstiftkerze verringert werden.

Dabei ist es vorteilhaft, dass die Kraftübertragungshülse an einer Innenfläche mit einer elektrisch isolierenden Isolierungsschicht beschichtet oder dass eine an der Innenfläche anliegende elektrisch isolierenden Hülse vorgesehen ist. Die elektrische Isolierung erfolgt dabei gegenüber dem Metallanschlußbolzen.

Ferner ist es vorteilhaft, dass zum Abdichten des Innenraums gegenüber der Kammer der Brennkraftmaschine eine Metallmembran vorgesehen ist, die einerseits mit dem Heizelement und andererseits mit dem Gehäuse verbunden ist, wobei die Metallmembran im eingebauten Zustand der Glühstiftkerze in Bezug auf die Summe aus der Einbaukraft und der Vorspannkraft um die Vorspannkraft mechanisch teilentlastet ist. Die Reduzierung der durch die Vorspannkraft bedingten Beaufschlagung der Metallmembran ermöglicht eine flexible, insbesondere elastische, Ausgestaltung der Metallmembran, um eine Messung des Druckes mit ausreichender Genauigkeit zu gewährleisten, wobei gleichzeitig eine Beschädigung der Metallmembran verhindert ist.

### Zeichnung

Bevorzugte Ausführungsbeispiele der Erfindung sind in der nachfolgenden Beschreibung anhand der beigefügten Zeichnungen näher erläutert. Es zeigt:
Fig. 1 ein erstes Ausführungsbeispiel einer erfindungsgemäßen Glühstiftkerze in einer schematischen Schnittdarstellung und
Fig. 2 ein zweites Ausführungsbeispiel einer erfindungsgemäßen Glühstiftkerze in einer schematischen Schnittdarstellung.

### Beschreibung der Ausführungsbeispiele

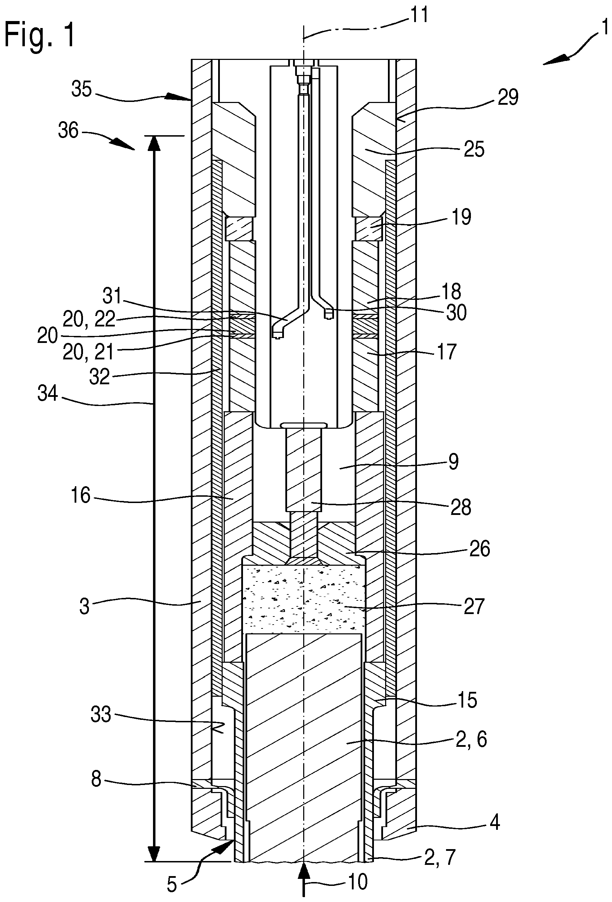

Fig. 1 zeigt ein erstes Ausführungsbeispiel einer Glühstiftkerze 1 in einer axialen Schnittdarstellung. Die Glühstiftkerze 1 kann insbesondere als Glühstiftkerze 1 für eine luftverdichtende, selbstzündende Brennkraftmaschine ausgestaltet sein. Ein stabförmiges Heizelement 2 der Glühstiftkerze 1 ragt bei Vor- und Wirbelkammermotoren in die Kammer der Brennkraftmaschine und bei Motoren mit Direkteinspritzung in eine Kammer des Motors. Die erfindungsgemäße Glühstiftkerze 1 eignet sich jedoch auch für andere Anwendungsfälle.

Die Glühstiftkerze 1 weist ein Gehäuse 3 auf. Das Gehäuse 3 umfasst einen Dichtkonus 4, wobei das stabförmige Heizelement 2 an einer kammerseitigen Öffnung 5 des Dichtkonus 4 aus dem Gehäuse 3 in die Kammer der Brennkraftmaschine ragt. Das stabförmige Heizelement 2 umfasst einen keramischen Heizkörper 6 und einen Stützkörper 7, der den keramischen Heizkörper 6 zumindest abschnittsweise umfänglich umschließt. Zwischen dem Dichtkonus 4 und dem übrigen Teil des Gehäuses 3 ist eine Metallmembran 8, die insbesondere als Stahlmembran 8 ausgestaltet sein kann, vorgesehen. Die Metallmembran 8 ist dabei einerseits mit dem Stützkörper 7 des Heizelements 2 und andererseits mit dem Gehäuse 3 verbunden, um einen Innenraum 9 der Glühstiftkerze 1 gegenüber der Kammer der Brennkraftmaschine abzudichten. Der Innenraum 9 stellt somit einen Teil einer konzentrischen Durchgangsbohrung des Gehäuses 3 dar.

Durch einen in der Kammer der Brennkraftmaschine herrschenden Druck wird eine Beaufschlagung des Heizelements 2 in einer axialen Richtung 10, das heißt in Richtung einer Achse 11 des Gehäuses 3, erreicht. Die dabei auf das Heizelement 2 einwirkende Kraft wird über einen Bund 15 des Stützkörpers 7, an dem der Stützkörper 7 einen vergrößerten Durchmesser aufweist, über eine Kraftübertragungshülse 16 und ein Kompensationselement 17 auf einen Drucksensor 20 übertragen. Dabei stützt sich der Drucksensor 20 über ein Kompensationselement 18 und eine Isolierscheibe 19 an einem Fixierelement 25 ab. Die Kraftübertragungshülse 16 weist eine Stufenbohrung auf, um eine Abstützung für einen Metallanschlussbolzen 26 zu gewährleisten, der über eine Graphitfüllung 27 mit einer keramischen Schicht des keramischen Heizkörpers 6 elektrisch kontaktiert ist. Der Metallanschlussbolzen 26 ist über eine zumindest teilweise flexibel ausgestaltete Glühstromleitung 28 mit einer elektrischen Versorgungsspannung beaufschlagbar. Ferner ist das Stützrohr 7 über die Metallmembran 8 mit dem Gehäuse 3 der Glühstiftkerze 1 verbunden, um den Stromkreis zu schließen.

Der Drucksensor 20 weist ringförmige Kontaktelemente 21, 22 auf, die mit Messleitungen 30, 31 verbunden sind. Das vorzugsweise metallische Fixierelement 25 ist durch eine Schweißverbindung 29 oder dergleichen mit dem Gehäuse 3 verbunden. Die Isolierscheibe 19 gewährleistet dabei eine Isolierung gegenüber dem elektrisch leitenden Kompensationselement 18, das mit dem ringförmigen Kontaktelement 22 verbunden ist.

Bei der Beaufschlagung des Heizelements 2 mit dem in der Kammer herrschenden Druck erzeugt ein beispielsweise piezoelektrischer Teil des Drucksensors 20 eine Messladung, die mittels der aus dem Gehäuse 3 zu einer geeigneten Auswerteschaltung geführten Messleitungen 30, 31 messbar ist.

Ferner weist die Glühstiftkerze 1 ein hülsenförmiges Vorspannelement 32, das heißt eine Vorspannhülse 32, auf. Die Vorspannhülse 32 ist einerseits mit dem Bund 15 des Stützkörpers 7 des Heizelements 2 und andererseits mit dem Fixierelement 25 verbunden. Dabei ist die Vorspannhülse 32 beabstandet zu einer Gehäuseinnenwand 33, die den Innenraum 9 in radialer Richtung begrenzt, angeordnet, um einen mechanischen Kontakt mit dem Gehäuse 3 zu vermeiden. Die Kompensationselemente 17, 18 gleichen temperaturbedingte Dehnungen der Bauteile des Kraftpfades der Glühstiftkerze 1 aus, die einen Einfluss auf die Druckmessung mittels des Drucksensors 20 haben. Speziell wird eine Dehnung der Kraftübertragungshülse 16, der Vorspannhülse 32, dem Fixierelement 25, der Isolierscheibe 19 und dem Drucksensor 20 ausgeglichen. Dadurch wird eine hohe Zuverlässigkeit der Druckmessung bei verschiedenen Temperaturen mittels des Drucksensors 20 erreicht.

Die Vorspannhülse 32 spannt den Drucksensor 20 und die weiteren zwischen dem Bund 15 des Stützkörpers 7 des Heizelements 2 und dem Fixierelement 25 vorgesehenen Bauteile, das heißt die Kraftübertragungshülse 16, die Kompensationselemente 17, 18 und die Isolierscheibe 19, mit einer Vorspannkraft vor, die beispielsweise 300 N bis 500 N bei Normaltemperatur ist. Die Vorspannung ist dabei so gewählt, dass auch bei extremen Einsatztemperaturen, beispielsweise bei -40°C, eine gewisse Vorspannung gegeben ist. Durch die Vorspannung wird ein spaltfreies Aneinanderliegen der Bauteile zwischen dem Bund 15 des Stützkörpers 7 und dem Fixierelement 25 gewährleistet, so dass Hystereseeffekte bei der Messung des Druckes verhindert sind. Außerdem wird bei der eingebauten Glühstiftkerze 1, bei der die Metallmembran 8 bereits mit der Einbaukraft beaufschlagt ist, eine zusätzliche Beaufschlagung der Metallmembran 8 mit der Vorspannkraft vermieden. Dadurch ergibt sich im eingebauten Zustand der Glühstiftkerze 1 eine Entlastung der Metallmembran 8 um die Vorspannkraft verglichen mit einem Fall, in dem die Metallmembran 8 mit der Summe aus der Einbaukraft und der Vorspannkraft beaufschlagt ist. Dadurch kann die Metallmembran 8 flexibel, insbesondere dünn und damit elastisch, ausgelegt werden, wodurch der Einfluss der Metallmembran 8 auf die Messung des Druckes verringert ist. Außerdem wird eine definierte Vorspannung des Drucksensors 20 erreicht, so dass bei der Auswertung der über die Messleitungen 30, 31 übertragenen Messsignale von einem gewissen Ausgangspunkt in der Sensorkennlinie ausgegangen werden kann.

Die Kraftübertragungshülse 16 ist vorzugsweise aus Keramik gebildet, um den Metallanschlussbolzen 26 gegenüber der vorzugsweise aus einem Metall oder einer Metalllegierung bestehenden Vorspannhülse 32 zu isolieren.

Durch die hülsenförmige Ausgestaltung der Kraftübertragungshülse 16, der Kompensationselemente 17, 18 und des Fixierelements 25 sowie die ringförmige Ausgestaltung des Drucksensors 20 und der Isolierscheibe 19 können diese Bauteile weitgehend innerhalb der Vorspannhülse 32 angeordnet werden, und gleichzeitig die Messleitungen 30, 31 sowie die Glühstromleitung 28 in der Nähe der Achse 11 durch den Innenraum 9 zu dem Drucksensor 20 beziehungsweise dem Metallanschlussbolzen 26 geführt werden. Somit ist ein kompakter Aufbau der Glühstiftkerze 1 möglich, wodurch eine Länge 34 eines Druckmessmoduls 36, das die Vorspannhülse 32, den Bund 15, die Kraftübertragungshülse 16, die Kompensationselemente 17, 18, den Drucksensor 20, die Isolierscheibe 19 und das Fixierelement 25 umfasst und zumindest in etwa vom Dichtkonus 4 bis zu einer Befestigungsstelle 35, an der das Fixierelement 25 mit dem Gehäuse 3 verbunden ist, reicht, reduziert werden kann, um Eigenfrequenzen des Druckmessmoduls 36 zu höheren Frequenzen hin zu verschieben. Dadurch wird eine Beeinflussung der Druckmessung durch Eigenschwingungen des Druckmessmoduls 36 auch bei schnell laufenden Brennkraftmaschinen verhindert oder zumindest verringert.

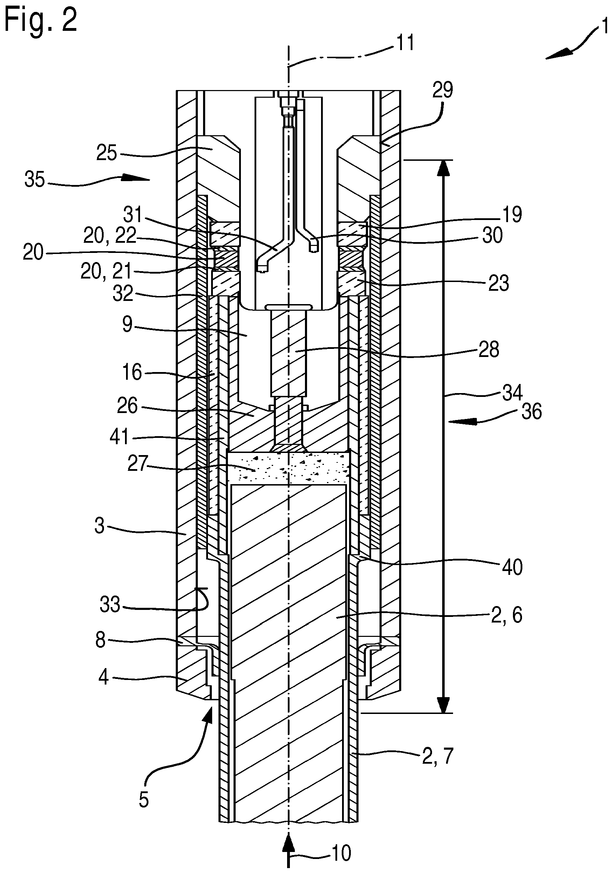

Fig. 2 zeigt eine Glühstiftkerze 1 gemäß einem zweiten Ausführungsbeispiel der Erfindung. Bereits beschriebene Elemente sind dabei mit übereinstimmenden Bezugszeichen versehen, wodurch sich eine wiederholende Beschreibung erübrigt.

Bei diesem Ausführungsbeispiel ist das Stützrohr 7 des stabförmigen Heizelements 2 an seinem kammerfernen Ende an einem Abschnitt 40 mit erweitertem Durchmesser ausgebildet. Ferner ist eine Isolierung 41 vorgesehen, die innerhalb der Kraftübertragungshülse 16 vorgesehen ist. Die Kraftübertragungshülse 16 umschließt abschnittsweise einen von der Isolierung 41 umgebenen kammerfernen Teil des keramischen Heizkörpers 6 und stützt sich in axialer Richtung an dem Abschnitt 40 des Stützrohrs 7 ab. Die Isolierung 41 kann durch eine elektrisch isolierende Isolierungsschicht gebildet sein, mit der eine Innenfläche der Kraftübertragungshülse 16 zumindest abschnittsweise beschichtet ist. Die Isolierung 41 kann auch durch eine Hülse aus elektrisch isolierendem Material gebildet sein, die zumindest teilweise in die Kraftübertragungshülse 16 eingeschoben ist, wobei ein Außendurchmesser der Isolierung 41 an einen Innendurchmesser der Kraftübertragungshülse 16 angepasst ist. Die Vorspannhülse 32 ist am Abschnitt 40 mit dem Stützkörper 7 verbunden. Die Kraftübertragungshülse 16 des zweiten Ausführungsbeispiels ist vorzugsweise aus einem Metall oder einer Metalllegierung gebildet und kann ohne Stufen ausgestaltet sein. Eine thermisch bedingte Ausdehnung der Vorspannhülse 32 kann dadurch vollständig oder zum großen Teil durch eine gleichgerichtete und entsprechend vorgegebene Ausdehnung der Kraftübertragungshülse 16 kompensiert werden. Dadurch können die Kompensationselemente 17, 18 im Vergleich zu dem in Fig. 1 dargestellten Ausführungsbeispiel entfallen. Dies hat den Vorteil, dass die Länge 34 des Druckmessmoduls 36 weiter verringert werden kann, so dass Eigenfrequenzen des Druckmessmoduls 36 noch weiter zu höheren Frequenzen verschoben sind. Außerdem ist die Ausgestaltung der metallischen Kraftübertragungshülse 16 erheblich kostengünstiger als eine keramische Kraftübertragungshülse 16 mit einer Stufenbohrung, wie sie in der Fig. 1 dargestellt ist. Die elektrische Isolierung ist in diesem Fall durch die Isolierung 41 und die Isolierungsscheiben 19, 23 gewährleistet.

Durch eine geeignete Wahl der Werkstoffe der Bauteile des Druckmessmoduls 36 ist es somit auch möglich, dass die Kompensationselemente 17, 18 entfallen und eine kurze Länge 34 des Druckmessmoduls 36, eine Verringerung der Anzahl der Spalte und eine Kostenreduzierung erreicht werden kann.

Die Erfindung ist nicht auf die beschriebenen Ausführungsbeispiele beschränkt.

## Patentansprüche

1. Glühstiftkerze (1) zur Anordnung in einer Kammer einer Brennkraftmaschine mit einem Gehäuse (3), einem stabförmigen Heizelement (2), das teilweise aus dem Gehäuse (3) ragt, und einem Drucksensor (20), der in einem Innenraum (9) des Gehäuses (3) angeordnet ist, wobei der Drucksensor (20) einerseits zumindest mittelbar mit dem stabförmigen Heizelement (2) in Wirkverbindung steht, um eine auf Grund eines in der Kammer herrschenden Druckes bedingte Beaufschlagung des Heizelementes (2) zum Bestimmen des in der Kammer herrschenden Druckes zu erfassen, und wobei sich der Drucksensor (20) andererseits zumindest mittelbar an einem mit dem Gehäuse (3) verbundenen Fixierelement (25) unter Vorspannung abstützt, **dadurch gekennzeichnet, dass** ein hülsenförmiges Vorspannelement (32) vorgesehen ist, das einerseits zumindest mittelbar mit dem Heizelement (2) und andererseits zumindest mittelbar mit dem Fixierelement (25) verbunden ist, dass das Vorspannelement (32) den Drucksensor (20) über das Heizelement (2) und das Fixierelement (25) mit der Vorspannung beaufschlagt, und dass der Drucksensor (20) im Inneren des hülsenförmigen Vorspannelements (32) angeordnet ist.

2. Glühstiftkerze nach Anspruch 1,
**dadurch gekennzeichnet,**
**dass** das Vorspannelement (32) beabstandet zu einer Gehäuseinnenwand des Gehäuses (3) angeordnet ist.

3. Glühstiftkerze nach Anspruch 1 oder 2,
**dadurch gekennzeichnet,**
**dass** zumindest ein Kompensationselement (17, 18) vorgesehen ist, dass das Vorspannelement (32) das Kompensationselement (17, 18) zusammen mit dem Drucksensor (20) über das Heizelement (2) und das Fixierelement (25) mit der Vorspannung beaufschlagt und dass das Kompensationselement (17, 18) zum zumindest teilweisen Kompensieren einer durch thermische Längenänderungen von Bauteilen des Kraftpfades der Glühstiftkerze (1) bedingten Beaufschlagung des Drucksensors (20) dient.

4. Glühstiftkerze nach Anspruch 3,
**dadurch gekennzeichnet,**
**dass** das Heizelement (2) über zumindest das Kompensationselement (17) mit dem Drucksensor (20) in Wirkverbindung steht.

5. Glühstiftkerze nach Anspruch 3,
**dadurch gekennzeichnet,**
**dass** sich der Drucksensor (20) zumindest über das Kompensationselement (18) an dem Fixierelement (25) abstützt.

6. Glühstiftkerze nach einem der Ansprüche 1 bis 5,
**dadurch gekennzeichnet,**
**dass** eine metallische Kraftübertragungshülse (16) vorgesehen ist, dass das Heizelement (2) zumindest über die Kraftübertragungshülse (16) mit dem Drucksensor (20) in Wirkverbindung steht, dass innerhalb der Kraftübertragungshülse (16) ein mit der Kraftübertragungshülse (16) verbundener Metallanschlussbolzen (26) angeordnet ist, der mit einer Glühstromleitung (28) verbunden ist und zur Zuführung von elektrischer Energie an das Heizelement (2) dient, und dass die Kraftübertragungshülse (16) gegenüber dem Metallanschlußbolzen (26) elektrisch isoliert ist.

7. Glühstiftkerze nach Anspruch 6,
**dadurch gekennzeichnet,**
**dass** eine Innenfläche der Kraftübertragungshülse (16) mit einer elektrisch isolierenden Isolierungsschicht (41) beschichtet ist.

8. Glühstiftkerze nach Anspruch 6,
**dadurch gekennzeichnet,**
**dass** zwischen dem Metallanschlußbolzen (26) und der Kraftübertragungshülse (16) eine elektrisch isolierende Hülse (41) vorgesehen ist, die den Metallanschlußbolzen (26) gegenüber der Kraftübertragungshülse (16) elektrisch isoliert.

9. Glühstiftkerze nach einem der Ansprüche 1 bis 8,
**dadurch gekennzeichnet,**
**dass** eine Metallmembran (8) vorgesehen ist, die zum Abdichten des Innenraums (9) gegenüber der Kammer der Brennkraftmaschine einerseits zumindest mittelbar mit dem Heizelement (2) und andererseits zumindest mittelbar mit dem Gehäuse (3) verbunden ist.

## Claims

1. Pencil-type glow plug (1) for arrangement in a chamber of an internal combustion engine, having a housing (3), having a rod-like heating element (2) which projects partially out of the housing (3), and having a pressure sensor (20) which is arranged in an interior space (9) of the housing (3), wherein the pressure sensor (20), on one side, is at least indirectly operatively connected to the rod-like heating element (2) in order to detect a loading of the heating element (2), caused by a pressure prevailing in the chamber, for the purposes of determining the pressure prevailing in the chamber, and wherein the pressure sensor (20), on the other side, is supported under preload at least indirectly on a fixing element (25) connected to the housing (3), **characterized in that** a sleeve-like preload element (32) is provided which, at one side, is connected at least indirectly to the heating element (2) and, at the other side, is connected at least indirectly to the fixing element (25), **in that** the preload element (32) subjects the pressure sensor (20) to the preload via the heating element (2) and the fixing element (25), and **in that** the pressure sensor (20) is arranged in the interior of the sleeve-like preload element (32).

2. Pencil-type glow plug according to Claim 1,
**characterized**
**in that** the preload element (32) is arranged spaced apart from a housing inner wall of the housing (3).

3. Pencil-type glow plug according to Claim 1 or 2,
**characterized**
**in that** at least one compensation element (17, 18) is provided, in that the preload element (32) subjects the compensation element (17, 18) together with the pressure sensor (20) to the preload via the heating element (2) and the fixing element (25), and in that the compensation element (17, 18) serves for at least partially compensating a loading of the pressure sensor (20) caused by thermal changes in length of components of the force path of the pencil-type glow plug (1).

4. Pencil-type glow plug according to Claim 3,
**characterized**
**in that** the heating element (2) is operatively connected via at least the compensation element (17) to the pressure sensor (20).

5. Pencil-type glow plug according to Claim 3,
**characterized**
**in that** the pressure sensor (20) is supported at least via the compensation element (18) on the fixing element (25) .

6. Pencil-type glow plug according to one of Claims 1 to 5,
**characterized**
**in that** a metallic force-transmitting sleeve (16) is provided, in that the heating element (2) is operatively connected at least via the force-transmitting sleeve (16) to the pressure sensor (20), in that, within the force-transmitting sleeve (16), there is arranged a metal connection bolt (26) which is connected to the force-transmitting sleeve (16) and which is connected to a glow current line (28) and which serves for the feed of electrical energy to the heating element (2), and in that the force-transmitting sleeve (16) is electrically insulated with respect to the metal connection bolt (26) .

7. Pencil-type glow plug according to Claim 6,
**characterized**
**in that** an inner surface of the force-transmitting sleeve (16) is coated with an electrically insulating insulation coating (41).

8. Pencil-type glow plug according to Claim 6,
**characterized**
**in that**, between the metal connection bolt (26) and the force-transmitting sleeve (16), there is provided an electrically insulating sleeve (41) which electrically insulates the metal connection bolt (26) with respect to the force-transmitting sleeve (16).

9. Pencil-type glow plug according to one of Claims 1 to 8,
**characterized**
**in that** a metal diaphragm (8) is provided which, in order to seal off the interior space (9) with respect to the chamber of the internal combustion engine, at one side, is connected at least indirectly to the heating element (2) and, at the other side, is connected at least indirectly to the housing (3).

## Revendications

1. Bougie de préchauffage (1) destinée à être placée dans une chambre d'un moteur à combustion interne et présentant un boîtier (3), un élément chauffant (2) en forme de barre qui déborde en partie hors du boîtier (3) ainsi qu'un capteur de pression (20) disposé dans l'espace intérieur (9) du boîtier (3), le capteur de pression (20) coopérant d'une part au moins indirectement avec l'élément chauffant (2) en forme de barre pour détecter une sollicitation de l'élément chauffant (2) provoquée sur la base de la pression qui règne dans la chambre en vue de déterminer la pression qui règne dans la chambre, le capteur de pression (20) s'appuyant d'autre part au moins indirectement et sous précontrainte contre un élément de fixation (25) relié au boîtier (3), **caractérisée en ce que** un élément de précontrainte (32) en forme de manchon est prévu, est relié d'une part au moins indirectement à l'élément chauffant (2) et d'autre part au moins indirectement à l'élément de fixation (25), **en ce que** l'élément de précontrainte (32) applique sur le capteur de pression (20) une précontrainte par l'intermédiaire de l'élément chauffant (2) et de l'élément de fixation (25) et **en ce que** le capteur de pression (20) est disposé à l'intérieur de l'élément de précontrainte (32) en forme de manchon.

2. Bougie de préchauffage selon la revendication 1, **caractérisée en ce que** l'élément de précontrainte (32) est disposé à distance de la paroi intérieure du boîtier (3).

3. Bougie de préchauffage selon les revendications 1 ou 2, **caractérisée en ce qu'**au moins un élément de compensation (17, 18) est prévu, **en ce que** l'élément de précontrainte (32) applique la précontrainte sur l'élément de compensation (17, 18) par l'intermédiaire de l'élément chauffant (2) et de l'élément de fixation (25) ainsi que par le capteur de pression (20) et **en ce que** l'élément de compensation (17, 18) sert à compenser au moins partiellement une sollicitation du capteur de pression (20) provoquée par des modifications thermiques de la longueur de composants sur le parcours de force de la bougie de préchauffage (1).

4. Bougie de préchauffage selon la revendication 3, **caractérisée en ce que** l'élément chauffant (2) coopère avec le capteur de pression (20) au moins par l'intermédiaire de l'élément de compensation (17).

5. Bougie de préchauffage selon la revendication 3, **caractérisée en ce que** le capteur de pression (20) s'appuie sur l'élément de fixation (25) au moins par l'intermédiaire de l'élément de compensation (18).

6. Bougie de préchauffage selon l'une des revendications 1 à 5, **caractérisée en ce qu'**une douille métallique (16) de transfert de force est prévue, **en ce que** l'élément chauffant (2) coopère avec le capteur de pression (20) au moins par l'intermédiaire de la douille (16) de transfert de force, **en ce qu'**un goujon de raccordement en métal (26) relié à la douille (16) de transfert de force est disposé à l'intérieur de la douille (16) de transfert de force, est relié à un conducteur (28) de courant de préchauffage et sert à apporter l'énergie électrique à l'élément chauffant (2) et **en ce que** la douille (16) de transfert de force est isolée électriquement par rapport au goujon de raccordement en métal (26).

7. Bougie de préchauffage selon la revendication 6, **caractérisée en ce que** la surface intérieure de la douille (16) de transfert de force est revêtue d'une couche d'isolation (41) électriquement isolante.

8. Bougie de préchauffage selon la revendication 6, **caractérisée en ce qu'**une douille électriquement isolante (41) qui isole électriquement le goujon de raccordement en métal (26) vis-à-vis de la douille (16) de transfert de force est prévue entre le goujon de raccordement en métal (26) et la douille (16) de transfert de force.

9. Bougie de préchauffage selon l'une des revendications 1 à 8, **caractérisée en ce qu'**elle présente une membrane métallique (8) qui est reliée d'une part au moins indirectement à l'élément chauffant (2) et d'autre part au moins indirectement au boîtier (3) pour assurer l'étanchéité de l'espace intérieur (9) vis-à-vis de la chambre du moteur à combustion interne.
